Europäisches Patentamt

European Patent Office

Office européen des brevets

(19)

(11) Numéro de publication : **0 434 472 A1**

(12) **DEMANDE DE BREVET EUROPEEN**

(21) Numéro de dépôt : **90401914.8**

(22) Date de dépôt : **02.07.90**

(51) Int. Cl.$^5$ : **B60D 1/62**

(30) Priorité : **22.12.89 FR 8917112**

(43) Date de publication de la demande :
**26.06.91 Bulletin 91/26**

(84) Etats contractants désignés :
**BE DE ES GB IT LU NL**

(71) Demandeur : **POMMIER & CIE**
**7 avenue de la Mare, Zone d'Activités des**
**Béthunes, Saint Ouen l'Aumone**
**F-95005 Cergy Pontoise Cédex (FR)**

(72) Inventeur : **Froissard, Alain**
**14, rue du Bordelais**
**F-95100 Argenteuil (FR)**

(74) Mandataire : **Madeuf, Claude Alexandre Jean**
**et al**
**CABINET MADEUF 3, avenue Bugeaud**
**F-75116 Paris (FR)**

(54) **Attelage automatique pour véhicule routier.**

(57) Attelage automatique pour véhicule routier dans lequel un ensemble d'attelage (2) est porté par le châssis (1) d'un véhicule tracteur et un timon (12) par un véhicule tracté, caractérisé en ce qu'un corps d'attelage (3) est relié par une articulation tridimensionnelle (26, 29) à une platine (33) portant des raccords (35, 35a, 35b...) disposés en regard de raccords complémentaires (36a, 36b...) portés par le timon (12).

FIG.1

EP 0 434 472 A1

# ATTELAGE AUTOMATIQUE POUR VEHICULE ROUTIER

La présente invention concerne un nouvel attelage automatique destiné à des trains routiers dans lesquels un véhicule tracteur doit être attelé à un véhicule tracté.

L'invention vise à réaliser un dispositif d'attelage qui ne nécessite aucune intervention manuelle ni pour l'attelage proprement dit ni pour la réalisation des liaisons devant exister entre le véhicule tracteur et le véhicule tracté tant en ce qui concerne les circuits électriques que les circuits pneumatiques, hydrauliques ou autres.

Conformément à l'invention, l'attelage automatique pour véhicule routier dans lequel un ensemble d'attelage est porté par le châssis d'un véhicule tracteur et un timon par un véhicule tracté est caractérisé en ce qu'un corps d'attelage est relié par une articulation tridimensionnelle à une platine portant des raccords disposés en regard de raccords complémentaires portés par le timon de façon que les raccords et raccords complémentaires soient amenés en coïncidence pour être accouplés ou désaccouplés en dépendance de l'accouplement et du désaccouplement du timon et du corps d'attelage.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est un élévation, en partie arrachée et en partie schématique, d'un mode de réalisation de l'attelage automatique de l'invention.

La fig. 2 est une coupe schématique vue sensiblement suivant la ligne II-II de la fig. 1.

Au dessin, la référence 1 désigne une traverse du châssis d'un véhicule tracteur à laquelle est fixé un ensemble d'attelage 2 comportant un corps d'attelage 3 qui, dans l'exemple de réalisation représenté, est porté par une tige 4 guidée dans un fourreau 5 prenant appui contre la traverse 1 et contre lequel porte un amortisseur 6 transmettant l'effort appliqué à une portée 7 fixée à l'extrémité de la tige 4.

Le corps d'attelage 3 contient des bagues 8, 9 reliées rigidement à un pavillon 10. Les bagues 8, 9 sont montées dans le corps d'attelage 3 pour pouvoir pivoter par rapport à celui-ci en même temps que le pavillon 10 qui est rappelé par un ressort 11 de façon que son embouchure soit normalement tournée vers un timon 12 faisant partie d'un véhicule tracté.

Dans l'exemple représenté, l'extrémité du timon 12 comporte un anneau 13 destiné à être relié à l'ensemble d'attelage par une broche 14 guidée axialement par les bagues 8, 9 dont l'axe géométrique vertical de même que celui de la broche 14 sont représentés en 15 au dessin.

La broche 14 est normalement maintenue dans la position basse représentée au moyen d'un verrou pivotant 16 dont l'extrémité est arc-boutée contre une portée 17 de la broche 14.

Un verrou de sécurité 18 ou verrou second constitué par un doigt introduit dans une chape 19 formée par la tête de la broche 14 est normalement disposé au-dessus du verrou pivotant 16. Le verrou de sécurité 18 est commandé pour être escamoté par le verrou 16. Son retrait est assuré par un glissement de son extrémité sur un plan incliné du verrou 16 lorsque celui-ci est entraîné en rotation autour de son axe 21. Un ressort tend à ramener toujours le verrou 18 dans la chape 19 de la broche.

Le verrou 16 est calé sur un arbre 21 commandé par un vérin 22 illustré schématiquement et normalement porté par le corps d'attelage 3. L'arbre 21 peut aussi être commandé par un levier manuel 23 pouvant être déplacé de l'une à l'autre des deux positions illustrées.

Pour permettre l'actionnement de la broche, celle-ci est, par exemple, munie dans sa chape 19 d'une traverse 24 disposée au dessus du verrou 16. On voit par ce qui précède qu'en alimentant le vérin 22 ou en actionnant le levier 23, en cas de panne du vérin 22 ou de son circuit de commande, qu'il est possible après retrait du verrou de sécurité 18 d'actionner l'arbre 21 pour faire pivoter le verrou 16 qui agit alors sur la traverse 24 pour soulever la broche 14 et la dégager de l'anneau 13.

Le mécanisme de commande de l'actionnement décrit ci-dessus de la broche 14 illustre un mode de réalisation particulier mais il est évident que d'autres moyens pour la commande asservie de la broche 14 peuvent être mis en oeuvre. Il est possible, en particulier, que le vérin 22 ou un autre vérin commande directement la broche et que le verrou 16 soit lui-même commandé par un moyen particulier. Il en est de même en ce qui concerne le verrou de sécurité 18 qui pourrait être commandé par un vérin.

Le corps d'attelage 3 supporte un bâti 25 figuré par une équerre de façon que ce bâti suive exactement les mouvements du corps d'attelage 3 en particulier lorsque celui-ci est déplacé par rapport à la traverse 1 du châssis du véhicule.

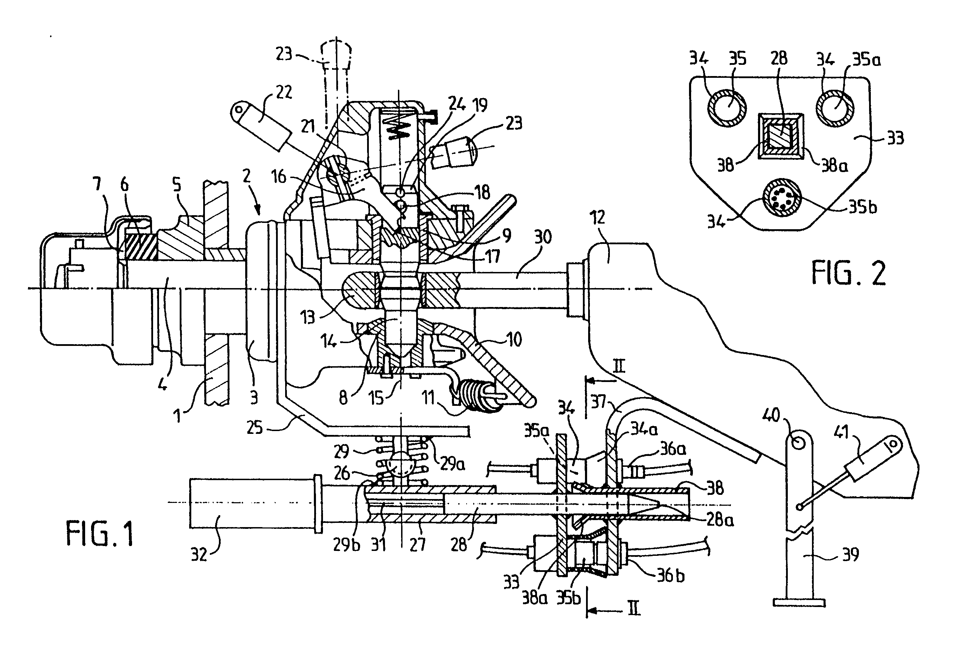

Le bâti 25 supporte par une articulation tridimensionnel 26, par exemple une rotule, un fourreau 27 dans lequel est guidé un doigt polygonal 28 qui, à la fig. 2, est représenté comme étant de section carrée de même que le fourreau 27 qui est, par ailleurs, relié au bâti 25 par un ressort 29, par exemple hélicoïdal.

Les spires terminales du ressort 29 sont fixées en 29a au bâti 25 et en 29b au fourreau 27. Le ressort 29 est avantageusement précontraint pour compenser les jeux de l'articulation tridimensionnel 26 et la fixation des spires terminales 29a, 29b est choisie pour que l'axe longitudinal du fourreau 27 se trouve dans le même plan vertical que l'axe géométrique 15 de la broche 14 et que l'axe longitudinal 30 de l'ensemble d'attelage 2, lorsque les organes ci-dessus sont au repos. De plus, l'axe vertical de la broche 14 est avantageusement le même que celui de la rotule 26.

Les moyens décrits ci-dessus font que le ressort 29 travaille à la compression, à la flexion et à la torsion lorsque des forces sont appliquées au doigt 28 comme cela est décrit dans ce qui suit et que ledit ressort tend toujours à ramener ledit doigt 28 dans une position pour laquelle il se trouve dans le plan vertical défini précédemment.

Le doigt 28 est relié par une tige 31 à un vérin à double effet 32 et son extrémité libre 28a est effilée.

Outre ce qui précède, le doigt 28 est muni d'une platine 33 portant des fourreaux 34 à extrémité évasée 34a.

Les fourreaux 34 contiennent des raccords tels que 35, 35a, 35b... constitués par exemple par un raccord de commande de frein en ce qui concerne le raccord 35, un raccord d'amenée d'un fluide tel que de l'air comprimé pour un circuit de secours en ce qui concerne le raccord 35a, des connecteurs électriques en ce qui concerne le raccord 35b, etc.

Des raccords complémentaires, tels que 36a et 36b, sont, par ailleurs, disposés sur une patte 37 fixée au timon 12, ces raccords complémentaires occupant évidemment une position dans l'espace correspondant à la position des raccords 35, 35a, 35b, etc.

La patte 37 supporte, de plus, une douille 38 à extrémité évasée 38a et dont l'alésage est de même section que celle du doigt 28.

Le timon 12 est, par ailleurs, muni d'au moins une béquille 39 rétractable qui est avantageusement articulée sur une articulation 40 et commandée par un vérin 41 pouvant être à simple ou double effet. S'il est à simple effet, le rappel est assuré par un ressort de rappel. S'il est à double effet, une connection type 35c, 36c peut être annexée aux plaques 33 et 37.

A simple effet, le retrait de la béquille peut être assuré par la mise sous pression du vérin 41 après accouplement des platines 33 et 37, le vérin pouvant être avantageusement monté en dérivation sur le circuit pneumatique principal de la remorque.

Lorsque le véhicule tracté comportant le timon 12 est dételé, ce timon est supporté par la béquille 39 qui se trouve en position développée. De cette manière, le timon est maintenue à un niveau correspondant à celui délimité par l'embouchure du pavillon 10 et la broche 14 de l'ensemble d'attelage est en position soulevée.

Pour atteler le véhicule tracteur, l'ensemble d'attelage recule vers le timon 12 qui, est, par conséquent, introduit vers le fond du pavillon 10. Il en résulte un soulèvement éventuel de la flèche qui est ainsi amenée dans une position pour laquelle l'extrémité effilée 28a du doigt 28 se trouve dans le prolongement de l'extrémité évasée 38a de la douille 38.

Le véhicule tracteur continuant à reculer, l'anneau 13 vient occuper la position illustrée à la fig. 1. Le vérin 32 est alors alimenté et le doigt 28 pénètre dans la douille 38.

Le doigt 28 étant de forme polygonale, il en résulte qu'il est centré par rapport à la douille 38 de sorte que les raccords 35, 35a, 35b... sont alignés avec les raccords complémentaires 36a... 36b..L'articulation tridimensionnelle 26 permet de compenser les écarts de position pouvant exister entre le corps d'attelage 3 et le timon 12 de sorte que les raccords 35... et raccords complémentaires 36 sont parfaitement alignés et accouplés les uns par rapport aux autres.

Lorsque le doigt 28 a suffisamment avancé, les fourreaux 34 viennent en appui contre la patte 37 de sorte que les raccords et raccords complémentaires ne sont pas soumis à des contraintes excessives.

Lorsque l'accouplement est finalement réalisé, la béquille 39 est rétractée par le vérin 41.

L'alimentation du vérin 32 est prévue pour que ce vérin exerce une force continue par la platine 33 et les fourreaux 34 sur la patte 37, ce qui a pour effet que l'effort transmis l'est au timon 12 et, par conséquent, à l'anneau 13 qui est constamment appliqué sans jeu sur la broche 14.

Pour le contrôle de la bonne exécution des opérations décrites dans ce qui précède, il est avantageux de munir le verrou de sécurité 18 d'au moins un interrupteur fin de course, ce qui permet de connaître la position de la broche 14 selon que l'interrupteur fin de course est ouvert ou fermé.

Un circuit électrique approprié permet de transmettre cette information à un tableau de commande et/ou à l'intérieur de la cabine du véhicule tracteur.

La connaissance de la position du verrou de sécurité 18 fait évidemment connaître la position de la broche 14 et, par conséquent, l'état accouplé ou désaccouplé de l'attelage.

Par ailleurs, les connexions électriques réalisées par exemple par les raccords 35b, 36b rendent possible la réalisation de circuits de contrôle qui font connaître la position des raccords décrits dans ce qui précède. Par exemple la connaissance de la fin de l'exécution de toutes les opérations peut être avantageusement obtenue par un interrupteur fin de course disposé à proximité de la béquille 39. L'interrupteur fin de course est ouvert ou fermé suivant que la béquille est à la verticale ou à l'horizontale.

Il est évidemment possible de réaliser des circuits pour la commande en cascade des différents vérins et le contrôle de leurs positions respectives en munissant les différentes parties mobiles de l'attelage de commutateurs appropriés dont l'état provoque le déclenchement des opération et leur contrôle par affichage à un ou plusieurs tableaux de vérification.

Il est, par exemple, possible que l'introduction de l'anneau 13 dans le pavillon 10 provoque l'actionnement d'un commutateur provoquant celui du vérin 22 de commande de la broche 14, etc.

L'invention n'est pas limitée à l'exemple de réalisation, représenté et décrit en détail, car diverses modifications peuvent y être apportées sans sortir de son cadre. En particulier, le doigt 28, de section polygonale, peut être remplacé par plusieurs doigts, par exemple deux ou davantage, de section circulaire disposés de façon à pénétrer dans des douilles complémentaires 38 de la patte 37.

## Revendications

1. Attelage automatique pour véhicule routier dans lequel un ensemble d'attelage (2) est porté par le châssis (1) d'un véhicule tracteur et un timon (12) par un véhicule tracté, caractérisé en ce qu'un corps d'attelage (3) est relié par une articulation tridimensionnelle (26, 29) à une platine (33) portant des raccords (35, 35a, 35b...) disposés en regard de raccords complémentaires (36a, 36b) portés par le timon (12) de façon que les raccords et raccords complémentaires soient amenés en coïncidence pour être accouplés ou désaccouplés en dépendance de l'accouplement et du désaccouplement du timon (12) et du corps d'attelage (3).

2. Attelage automatique suivant la revendication 1, caractérisé en ce que la platine portant les raccords (35, 35a, 35b) est reliée à l'articulation tridimensionnelle (26, 29) par un fourreau (27) de guidage d'au moins un doigt (28).

3. Attelage automatique suivant l'une des revendications 1 ou 2, caractérisé en ce que le doigt (28) est de section polygonale à extrémité (28a) effilée.

4. Attelage automatique suivant l'une des revendications 1 à 3, caractérisé en ce que la douille (38) est évasée et présente la même forme en section que le doigt (28).

5. Attelage automatique suivant l'une des revendications 1 à 4, caractérisé en ce que le doigt (28) est commandé par un vérin (32), lui-même commandé en dépendance de l'accouplement, respectivement le désaccouplement du timon (12) et du corps d'attelage (3).

6. Attelage automatique suivant l'une des revendications 1 à 5, caractérisé en ce que les raccords (35, 35a, 35b) sont portés par un platine (33) fixée au doigt (28) et en ce que ladite platine (33) supporte des douilles (34) à extrémité évasée (34a), lesdites douilles venant en application contre une patte (37) portant les raccords complémentaires (36a, 36b) fixés au timon (12).

7. Attelage automatique suivant l'une des revendications 1 à 6, caractérisé en ce que l'articulation tridimensionnelle comporte une rotule (26) et un ressort (29) respectivement interposés entre le corps d'attelage (3) et le fourreau (27) contenant le doigt (28), ledit ressort (29) étant fixé par ses spires d'extrémité respectivement au corps d'attelage (3) et au fourreau (27).

8. Attelage automatique suivant l'une des revendications 1 à 7, caractérisé en ce que l'alimentation du vérin (32) est maintenue après accouplement des raccords (35, 35a, 35b) et les raccords complémentaires (36a, 36b) de façon à exercer un effort de poussée sur le timon (12) pour que celui-ci exerce lui-même un effort sur le corps d'attelage auquel il est relié.

9. Attelage automatique suivant l'une des revendications 1 à 8 caractérisé en ce que le corps d'attelage (3) est du type comportant un pavillon de guidage (10) pour un anneau (13) du timon (12) de manière à amener ledit timon dans une position pour laquelle la douille (38) qu'il comporte soit sensiblement alignée avec l'extrémité effilée (28a) du doigt (28).

10. Attelage automatique suivant l'une des revendications 1 à 9, caractérisé en ce que le corps d'attelage (3) comporte une broche (14) dont le mouvement provoquant son introduction respectivement son retrait de l'anneau (13) du timon (12) est commandé par un vérin (22).

11. Attelage automatique suivant l'une des revendications 1 à 10, caractérisé en ce que le vérin (22) de commande de la broche (14) agit sur celle-ci par l'intermédiaire d'un verrou pivotant (16) coopérant avec une porté (17) de la broche (14) maintenue supplémentairement par un verrou de sécurité (18) commandé par un ressort de rappel l'amenant à traverser cette broche (14).

12. Attelage automatique suivant l'une des revendications 1 à 11, caractérisé en ce que le vérin (22) commandant le mouvement de la broche est relié au verrou (16) par un arbre de commande (21) de ce verrou agissant sur la broche (14) d'accouplement du timon (12) par une traverse (24) accessible après déplacement du verrou de sécurité (18) par le verrou (16).

13. Attelage automatique suivant l'une des revendications 1 à 12, caractérisé en ce que le timon (12) est muni d'une béquille rétractable (39) reliée à un vérin de manoeuvre (41).

14. Attelage automatique suivant l'une des revendications 1 à 12, caractérisé en ce que la commande du vérin de manoeuvre (41) peut être effectuée par l'établissement de la pression dans le circuit pneumatique principal après accouplement des raccords et raccords complémentaires.

15. Attelage automatique suivant l'une des revendications 1 à 14, caractérisé en ce qu'au moins l'ensemble vérin (20), verrou de sécurité (18), vérin de manoeuvre (41) est muni d'au moins un interrupteur fin de course pour le contrôle d'un circuit de commande et de vérification de position.

16. Attelage automatique suivant l'une des revendications 1 à 15, caractérisé en ce que les différents vérins de manoeuvre comportent des interrupteurs fin de course faisant partie d'un circuit de commande et de vérification pour le fonctionnement en cascade tant pour produire l'accouplement que le désaccouplement.

FIG.1

FIG. 2

EP 0 434 472 A1

EP 0 434 472 A1

Office européen
des brevets

**RAPPORT DE RECHERCHE EUROPEENNE**

Numero de la demande

EP   90 40 1914

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4156551 (M.NAGASE ET AL.)<br>* le document en entier * | 1, 9 | B60D1/62 |
| A | | 2, 4 | |
| Y | US-A-1327031 (J.B.GENIN)<br>* le document en entier * | 1, 9 | |
| A | | 6 | |
| A | FR-A-1335016 (ETABLISSEMENTS L.FAIVELEY)<br>* page 3, colonne 1, alinéa 2 - page 3, colonne 2, alinéa 1; revendication 1; figures * | 1, 3 | |
| A | GB-A-1499815 (CHRYSLER U.K. LTD)<br>* le document en entier * | 1, 6 | |
| A | US-A-4136892 (CLARK EQUIPMENT CO)<br>* colonne 2, lignes 48 - 64 * | 13 | |
| A | GB-A-792031 (DAIMLER-BENZ AG)<br>* figures 2, 4 * | 9, 11, 12 | |
| A | DE-A-3226360 (ROCKINGER SPEZIALFABRIK FUR ANHÄNGER-KUPPLUNGEN)<br>* abrégé; figure * | 9, 11, 15 | **DOMAINES TECHNIQUES RECHERCHES (Int. Cl.5)**<br><br>B60D |

Le présent rapport a été établi pour toutes les revendications

| Lieu de la recherche | Date d'achèvement de la recherche | Examinateur |
|---|---|---|
| LA HAYE | 05 SEPTEMBRE 1990 | PEMBERTON P. |